# FASCICULE DE BREVET EUROPEEN

(11) **EP 2 816 991 B1**
(45) Date de publication et mention de la délivrance du brevet: **18.05.2016**
(21) Numéro de dépôt: 13710509.4
(22) Date de dépôt: 22.02.2013
(51) Int. Cl.: A61J 1/10, A61J 1/14, A61J 1/18, B29C 65/18, B65D 75/30, B29C 65/00, B29L 31/60, B29C 65/08, B29C 65/02, B29C 65/04

(54) **RÉCIPIENT POURVU D'UNE CHAMBRE D'ÉTANCHÉITÉ TRAVERSÉE PAR UN CONDUIT D'ÉCOULEMENT**
BEHÄLTER MIT EINER VERSCHLUSSKAMMER MIT EINEM DURCHGEHENDEN STRÖMUNGSROHR
CONTAINER PROVIDED WITH A SEALING CHAMBER THROUGH WHICH A FLOW PIPE PASSES

(30) Priorité: 22.02.2012 FR 1251604
(43) Date de publication de la demande: 31.12.2014
(73) Titulaire: Maco Pharma, 59420 Mouvaux (FR)
(72) Inventeur: GOUDALIEZ, Francis, F-59155 Faches-Thumesnil (FR)
(74) Mandataire: Sayettat, Julien Christian
(86) Numéro de dépôt international: PCT/FR2013/050372
(87) Numéro de publication internationale: WO 2013/124599

(56) Documents cités:
- EP-A1- 2 177 199
- WO-A1-2006/005391
- US-A1- 2011 233 180

## Description

L'invention concerne un récipient contenant ou destiné à contenir un fluide tel qu'une solution médicamenteuse, du sang ou un produit sanguin, ainsi qu'un procédé de fabrication d'un tel récipient.

L'invention s'applique aux récipients souples de type poches à sang ou poches de perfusion utilisées dans le domaine médical, notamment en transfusion sanguine et en perfusion.

La difficulté majeure dans la fabrication de poches stériles est la jonction entre un conduit d'écoulement formant le port d'entrée et/ou de sortie et les parois de la poche.

En effet, de telles poches sont généralement réalisées en matériau thermoplastique souple tel que le polychlorure de vinyle selon la méthode décrite par exemple dans le document US-3322590. Brièvement, on interpose un conduit d'écoulement formé d'un tube entre deux feuilles souples formant les parois de la poche. On soude ensuite les deux côtés longitudinaux de la poche en laissant ouverts le haut et le bas de la poche. On insère une première électrode dans le tube et une seconde électrode entoure la poche au niveau du tube. En faisant passer du courant dans les deux électrodes, on réalise la soudure du haut de la poche avec le tube. Enfin, on retire la première électrode du tube et le bas de la poche est soudé à son tour.

Cependant, dans cette méthode, si la première électrode à l'intérieur du tube n'est pas correctement centrée dans le tube, la soudure autour du tube peut être incomplète et créer une fuite.

Pour pallier en partie ce risque, il est aussi prévu dans le document US-3322590 de pourvoir la seconde électrode de rainures de sorte à former des nervures sur le tube après soudage avec les feuilles souples. Ces nervures permettent, outre un rendu plus esthétique, de renforcer la soudure en concentrant au niveau des nervures le rejet de matière lors de la soudure.

D'autres solutions ont également été envisagées. Par exemple, le document US 2005/0078887 propose de prolonger la soudure sur la partie du tube d'écoulement plongeant dans la poche.

Pour assurer la solidité et l'imperméabilité d'une soudure entre deux feuilles souples et un conduit d'écoulement, le document US 2011/0233180 propose une méthode dans laquelle les feuilles souples sont déformées au niveau des parties où elles doivent être soudées ensemble et en dehors des parties qui doivent être soudées avec le conduit. La déformation des feuilles est réalisée en chauffant les feuilles afin de former des vagues et ainsi les étirer. Les parties en contact avec le conduit ne sont pas étirées et la soudure est donc plus solide.

L'invention propose un moyen simple de limiter le risque de fuite entre les feuilles souples d'une poche et un conduit d'écoulement.

A cet effet, l'invention propose un récipient comprenant une enveloppe extérieure ayant deux parois souples associées entre elles de sorte à former au moins un compartiment principal contenant ou destiné à contenir un fluide, ledit récipient comprenant en outre au moins un conduit d'écoulement dont une extrémité débouche dans ledit compartiment principal et l'autre extrémité s'étend au delà desdites parois souples, ledit conduit d'écoulement étant associé auxdites parois souples le long d'un joint proximal et d'un joint distal distinct du joint proximal, lesdites parois souples enveloppant la partie du conduit d'écoulement comprise entre lesdits joints, de sorte à former, autour de ladite partie du conduit d'écoulement, une chambre d'étanchéité fermée et dépourvue d'accès.

Selon un deuxième aspect, l'invention concerne un procédé de fabrication d'un récipient selon le premier aspect, ledit procédé prévoyant les étapes de :
- disposer un conduit d'écoulement entre deux parois souples destinées à former l'enveloppe extérieure dudit récipient,
- associer lesdites parois souples et le conduit d'écoulement disposé entre lesdites parois le long d'un joint proximal et d'un joint distal, distinct dudit joint proximal, en formant une chambre d'étanchéité autour d'une partie dudit conduit d'écoulement,
- associer les parties desdites parois non encore associées entre elles de sorte à former le récipient.

D'autres objets et avantages apparaîtront au cours de la description qui suit.
La figure 1 représente de façon schématique une vue de face d'un récipient selon une première réalisation de l'invention.
La figure 2 représente de façon schématique une vue de face d'un récipient selon une deuxième réalisation de l'invention.
La figure 3 représente de façon schématique une vue de face de la chambre d'étanchéité du récipient de la figure 2.
La figure 4A représente de façon schématique une vue partielle en coupe de la chambre d'étanchéité de la figure 3 selon l'axe A-A.
La figure 4B représente de façon schématique une vue partielle en coupe selon l'axe B-B du conduit d'écoulement qui traverse la chambre d'étanchéité de la figure 3.
La figure 5 représente de façon schématique une vue partielle en coupe de la chambre d'étanchéité de la figure 3 selon l'axe C-C.
La figure 6 représente de façon schématique une vue partielle et en perspective d'une mâchoire selon une réalisation particulière utilisée pour la fabrication de la chambre d'étanchéité d'un récipient selon l'invention.
La figure 7 représente de façon schématique une vue partielle et en coupe d'une étape de fabrication de la chambre d'étanchéité du récipient dé la figure 2 selon un premier procédé.
Les figures 8A et 8B représentent chacune de façon schématique une vue partielle en coupe d'une étape de fabrication de la chambre d'étanchéité du récipient de la figure 2 selon un deuxième procédé.
Les figures 9A et 9B représentent de façon schématique une vue partielle et de face de la chambre d'étanchéité du récipient de la figure 2 après les étapes de fabrication des figures 8A et 8B, respectivement.

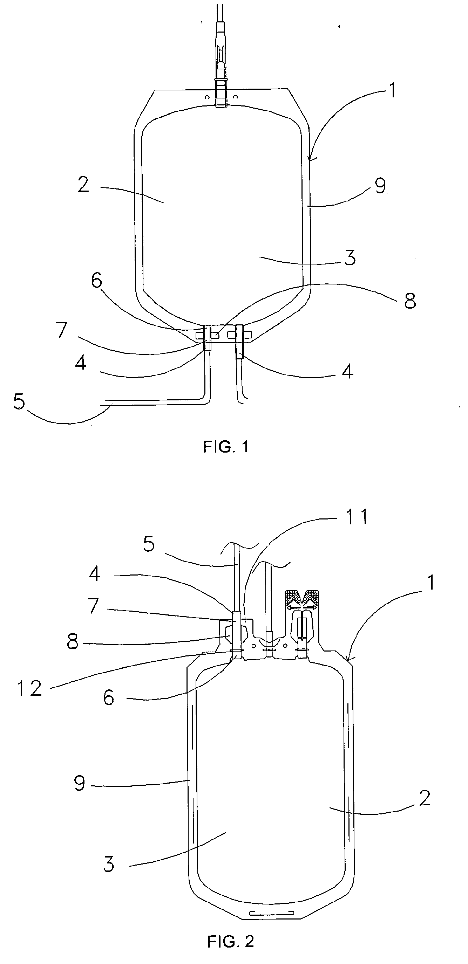

Comme représenté sur les figures 1 à 5, le récipient 1 de l'invention comprend une enveloppe extérieure ayant deux parois souples 2 associées entre elles de sorte à former au moins un compartiment principal 3 contenant ou destiné à contenir un fluide.

Le fluide est une solution médicale tel qu'une solution de perfusion, y compris une solution médicamenteuse, une solution saline ou une solution de glucose, ou une solution de nutrition entérale ou parentérale. Alternativement, le fluide est un fluide biologique tel que le sang ou un composant sanguin.

L'enveloppe extérieure est réalisée dans un matériau soudable par chaleur, ultrasons et/ou haute fréquence. Avantageusement, le matériau est en outre stérilisable, par exemple par vapeur, oxyde d'éthylène ou rayonnement.

Notamment, l'enveloppe extérieure du récipient est réalisée par exemple en matière thermoplastique tel que le polychlorure de vinyle, le polyéthylène, le polypropylène ou un copolymère de polyéthylène-polypropylène.

Pour la fabrication, l'enveloppe extérieure est réalisée à partir d'une gaine dont les bords latéraux sont assemblés entre eux ou bien les parois souples sont formées de deux feuilles souples associées entre elles le long d'un joint périphérique.

En particulier, les parois de l'enveloppe extérieure ont une forme sensiblement rectangulaire.

L'introduction et/ou le retrait de fluide du compartiment principal sont réalisés par l'intermédiaire d'un port d'entrée et/ou de sortie qui se présente généralement sous forme d'un conduit d'écoulement.

Notamment, le conduit d'écoulement est formé par une portion de tube.

Le récipient 1 de l'invention comprend un conduit d'écoulement 4 dont une extrémité débouche dans le compartiment principal et l'autre extrémité s'étend au delà desdites parois souples 2.

La première extrémité du conduit d'écoulement débouche dans le compartiment principal 3 de sorte à pouvoir introduire et/ou retirer le fluide dudit compartiment. L'autre extrémité dudit conduit s'étend au-delà desdites parois 2 de l'enveloppe du récipient, c'est-à-dire qu'elle débouche à l'extérieur dudit récipient 1.

Le conduit d'écoulement 4 est connecté ou destiné à être connecté à un set de perfusion pour injecter le fluide contenu dans le compartiment principal du récipient à un patient.

En variante, le conduit d'écoulement est connecté ou destiné à être connecté à une tubulure 5. Dans ce cas, la tubulure est connectée ou destinée à être connectée à d'autres composants d'un système à poches, tels qu'une aiguille de prélèvement, une unité de filtration ou d'autres récipients souples. Par exemple, sur les figures 1 et 2, une tubulure 5 est reliée au conduit d'écoulement 4 du récipient.

En particulier, le conduit d'écoulement 4 comprend en outre un dispositif sélectif d'ouverture/fermeture de l'écoulement fluidique à l'intérieur dudit conduit, tel qu'un ouvre-circuit. L'ouvre-circuit est compris en partie ou complètement dans la partie de tubulure contenue dans la chambre d'étanchéité.

En autre variante, l'extrémité du conduit d'écoulement qui s'étend au-delà des parois est pourvue d'un connecteur ou d'un site d'injection.

Le conduit d'écoulement 4 doit être associé de façon étanche entre les deux parois 2 de l'enveloppe du récipient. Si l'association est défectueuse et n'est pas étanche, il existe un risque non seulement de rompre la stérilité du fluide contenu dans le récipient mais aussi de contaminer le manipulateur du récipient si le fluide est toxique.

Selon l'invention, le conduit d'écoulement 4 du récipient 1 est associé aux parois souples 2 formant l'enveloppe extérieure du récipient le long d'un joint proximal 6 et d'un joint distal 7 distinct du joint proximal 6, lesdites parois souples 2 enveloppant la partie du conduit d'écoulement comprise entre lesdits joints 6,7, de sorte à former, autour de ladite partie du conduit d'écoulement 4, une chambre d'étanchéité 8 fermée et dépourvue d'accès.

Les termes "proximal" et "distal" sont définis par rapport au compartiment principal du récipient.

Le joint proximal 6 sépare la chambre d'étanchéité 8 et le compartiment principal 3 du récipient 1. Le joint proximal 6 est situé à proximité du compartiment principal 3 et à proximité de l'extrémité du conduit d'écoulement 4 débouchant dans le compartiment principal 3.

Le joint distal 7 est situé à distance du joint proximal 6, par exemple à la périphérie des parois 2 du récipient 1.

Contrairement à l'art antérieur dans lequel le conduit d'écoulement est associé aux parois du récipient le long d'un joint unique, l'invention propose d'associer le conduit le long de deux joints distants l'un de l'autre. Ainsi, si l'un des joints est défectueux, la probabilité pour que l'autre joint soit défectueux est très faible, de sorte que le contenu du compartiment principal, même en cas de défaut d'un des deux joints, reste stérile le cas échéant.

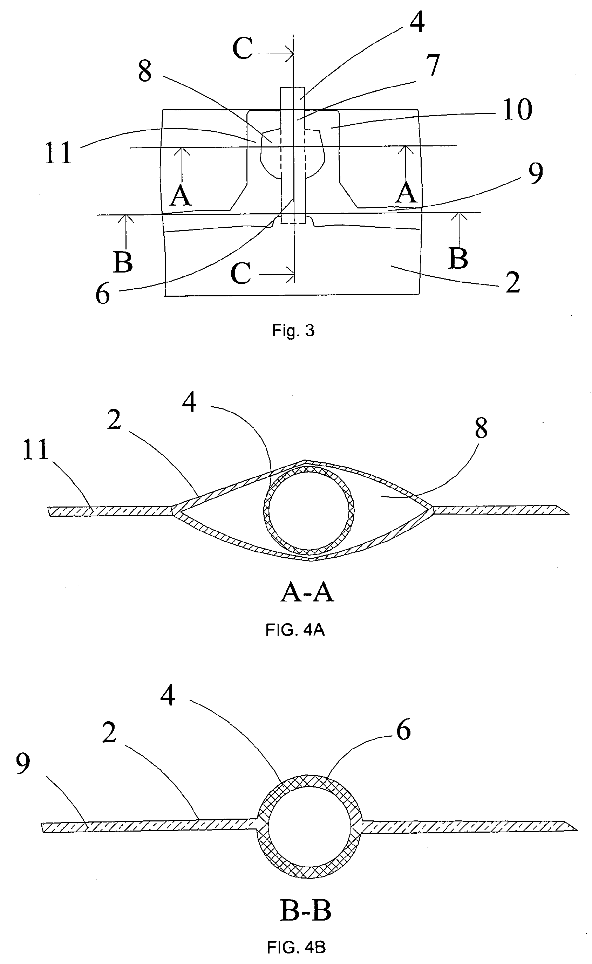

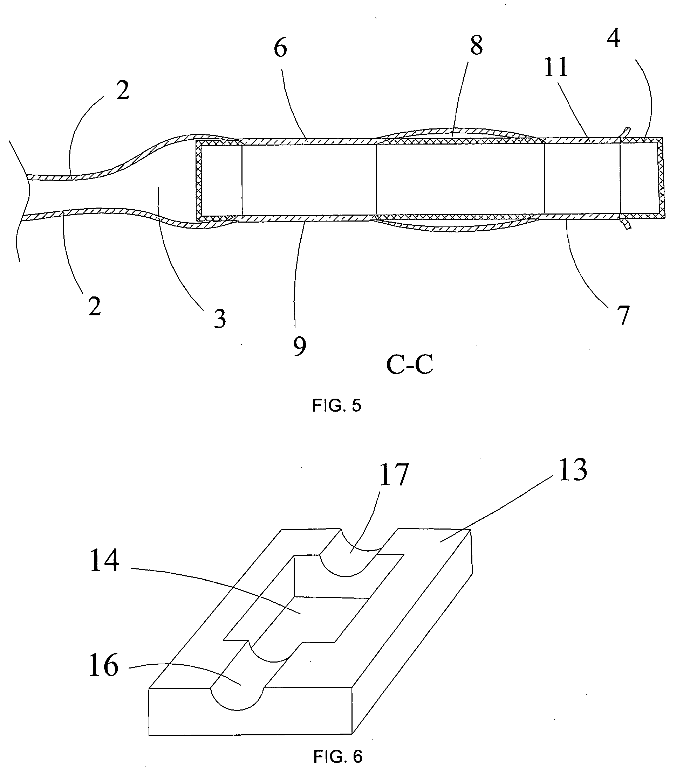

Entre lesdits deux joints 6,7, les parois souples enveloppent une partie du conduit d'écoulement 4, de sorte à former, autour de ladite partie du conduit d'écoulement, une chambre d'étanchéité 8 fermée et dépourvue d'accès. Ainsi, entre les deux joints 6,7, le conduit d'écoulement 4 n'est pas associé aux parois 2 du récipient, comme le montre les figures 4A et 5. A l'inverse, les parois 2 et le conduit d'écoulement 4 sont associés de façon étanche le long des joints proximal 6 et distal 7 (figure 4B).

Avantageusement, la distance entre les deux joints 6,7 est comprise entre 0,5 et 3 cm, avantageusement entre 1 et 1,5 cm.

La chambre d'étanchéité 8 ainsi formée est fermée, c'est-à-dire qu'elle est étanche aux liquides et aux gaz. La chambre 8 est également dépourvue d'accès : elle n'est pas destinée à contenir un fluide médical ou biologique. La chambre est traversée par la partie du conduit d'écoulement 4 définie entre le joint proximal 6 et joint distal 7, sans mettre en communication l'intérieur de la chambre avec l'intérieur du conduit. Notamment, le conduit d'écoulement 4 ne comprend pas d'ouverture débouchant dans la chambre d'étanchéité 8.

La chambre d'étanchéité 8 peut prendre plusieurs formes telles qu'une forme carrée, rectangulaire, ronde, ovale, elliptique, ou polygonale.

Avantageusement, les dimensions de la chambre d'étanchéité 8 sont ajustées à celles de la partie du conduit d'écoulement la traversant. Notamment, les dimensions intérieures de la chambre d'étanchéité 8 correspondent sensiblement aux dimensions extérieures de la partie du conduit d'écoulement 4 contenue dans ladite chambre.

Par exemple, la chambre d'étanchéité 8 possède une première dimension correspondant à la distance entre le joint proximal 6 et le joint distal 7, et une deuxième dimension perpendiculaire à la première dimension. La deuxième dimension est supérieure au diamètre extérieur de la partie du conduit d'écoulement 4 contenue entre le joint proximal 6 et le joint distal 7.

Notamment, la première dimension et la deuxième dimension sont chacune comprises entre 0,5 cm et 3 cm, avantageusement entre 1 et 1,5 cm. En exemple particulier, la chambre d'étanchéité forme un rectangle ayant une longueur d'environ 1,5 cm, correspondant à la longueur de la partie du conduit d'écoulement contenue entre le joint proximal 6 et le joint distal 7, et une largeur d'environ 1 cm.

Selon une réalisation particulière, les parois souples 2 sont formées de deux feuilles souples associées entre elles le long d'un joint périphérique 9.

Sur la figure 1, le joint proximal 6 et le joint distal 7 sont formés par une partie du joint périphérique 9, la chambre d'étanchéité 8 étant formée dans ledit joint périphérique 9.

Comme représenté sur la figure 1, le joint périphérique 9 présente une interruption formant la chambre d'étanchéité 8.

Selon une autre réalisation représentée sur les figures 2 et 3, chacune des parois souples 2 comprend une languette 10 associées entre elles le long d'un joint secondaire 11 de sorte à former la chambre d'étanchéité 8.

Le joint secondaire 11 s'étend en partie sur le joint périphérique 9 pour former la chambre d'étanchéité 8.

Comme illustré sur la figure 3, la chambre d'étanchéité 8 est formée entre le joint périphérique 9 et le joint secondaire 11. Avantageusement, le conduit d'écoulement 4 traverse la chambre d'étanchéité 8 en passant par le joint périphérique 9 et le joint secondaire 11. Dans ce cas, joint proximal 6 est formé par une partie du joint périphérique 9, le joint distal 7 étant formé par une partie du joint secondaire 11.

Chacun des joints, à savoir le joint proximal 6, le joint distal 7, le joint périphérique 9 et le joint secondaire 11, est formé notamment par soudure haute fréquence. D'autres types de soudure sont envisageables tels que la soudure à la chaleur ou par ultrasons.

Pour renforcer la soudure entre le conduit d'écoulement 4 et les parois 2 du récipient 1, il est possible de prévoir une ou plusieurs nervures de renforcement 12 sur les joints 6,7.

Selon une variante de réalisation, la chambre d'étanchéité 8 du récipient 1 contient un réactif capable de réagir avec le fluide du compartiment principal 3 pour détecter une fuite du joint proximal 6. Ce réactif est par exemple un indicateur coloré, sous forme de poudre ou liquide, qui change de couleur en présence du fluide contenu dans le compartiment principal 3.

Selon un deuxième aspect, l'invention concerne un procédé de fabrication d'un récipient selon le premier aspect, ledit procédé prévoyant les étapes de
- disposer un conduit d'écoulement 4 entre deux parois 2 souples destinées à former l'enveloppe extérieure dudit récipient 1,
- associer lesdites parois souples 2 et le conduit d'écoulement 4 disposé entre lesdites parois 2 le long d'un joint proximal 6 et d'un joint distal 7 distinct dudit joint proximal 6, en formant une chambre d'étanchéité 8 autour d'une partie dudit conduit d'écoulement 4,
- associer les parties desdites parois 2 non encore associées entre elles de sorte à former le récipient 1.

Lorsque l'enveloppe est formée par l'association de deux feuilles souples, le procédé comprend, préalablement à la disposition du conduit d'écoulement 4 entre les deux parois 2, l'association des seuls bords longitudinaux desdites feuilles souples de sorte à former une ouverture supérieure et une ouverture inférieure de chaque côté de l'enveloppe. Le conduit d'écoulement 4 est ensuite disposé entre les parois souples 2, dans l'ouverture supérieure de l'enveloppe, puis associé avec lesdites parois le long d'un joint proximal 6 et d'un joint distal 7 en formant la chambre d'étanchéité 8. Les parois 2 sont ensuite associées le long du bord supérieur puis du bord inférieur pour former le récipient.

Selon une mise en oeuvre particulière et en relation avec la figure 6, l'association des parois souples 2 et du conduit d'écoulement 4 est réalisée à l'aide d'un système de soudage comprenant au moins deux mâchoires 13 adaptées pour enfermer le conduit d'écoulement et les parois souples lorsque lesdites mâchoires sont fermées, lesdites mâchoires comprenant en outre une cavité 14 pour former au moins en partie la chambre d'étanchéité 8.

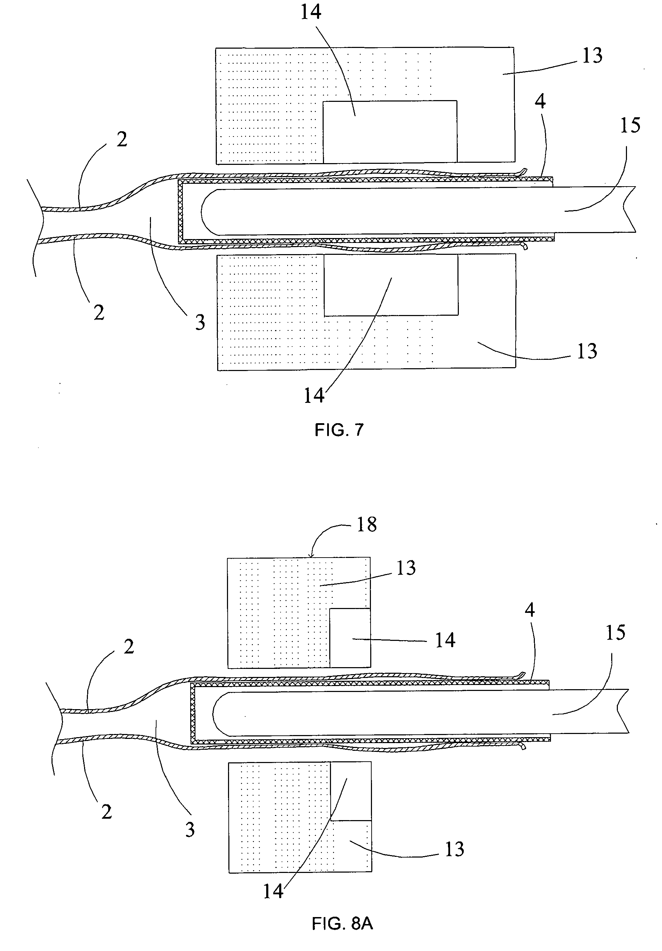

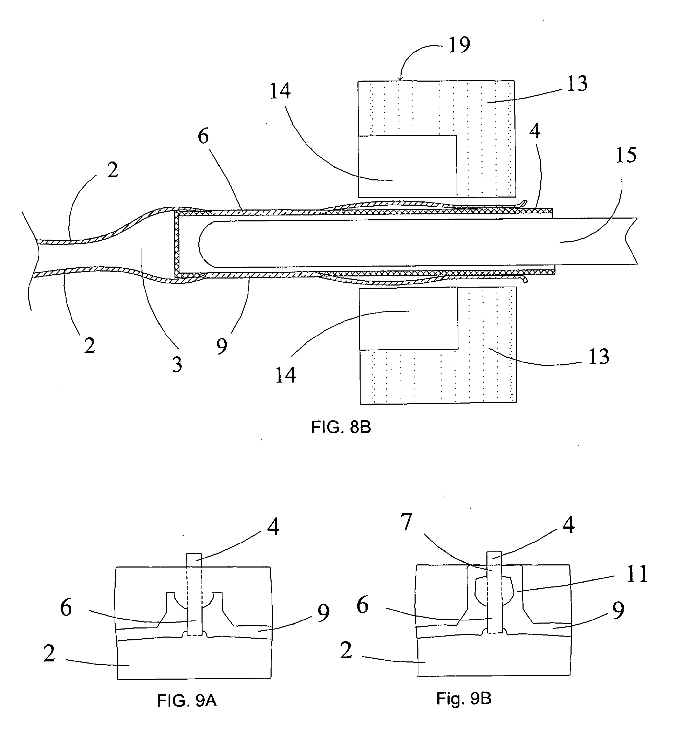

Lorsque les parois 2 et le conduit d'écoulement 4 sont soudés par haute fréquence, chacune des mâchoires 13 forme une électrode de soudure. Avantageusement et comme représenté sur les figures 7, 8A et 8B, une électrode en forme de tige 15 est en outre insérée à l'intérieur du conduit d'écoulement 4 pour réaliser la soudure entre le conduit 4 et les parois 2 par passage du courant haute fréquence.

Selon la figure 7, la chambre d'étanchéité est formée en une seule fois à l'aide d'un système comprenant deux mâchoires 13 de soudage disposées de part et d'autre des parois du récipient 2 et du conduit d'écoulement 4. C'est par exemple le cas lorsque la chambre d'étanchéité 8 est formée dans le joint périphérique 9 associant les deux parois 2 de l'enveloppe du récipient 1 comme représenté sur la figure 1.

En relation avec la figure 6, chacune des mâchoires 13 comprend au moins un premier et deuxième logement 16,17 agencés pour recevoir respectivement la partie du conduit d'écoulement sur laquelle le joint proximal 6 et joint distal 7 doivent être réalisés, et entre ces deux logements, une cavité 14 dont les dimensions correspondent sensiblement aux dimensions de la chambre d'étanchéité 8.

Selon les figures 8A,8B et 9A,9B, la chambre d'étanchéité 8 est formée en deux fois à l'aide d'un système de soudage comprenant un premier et deuxième jeu 18,19 de deux mâchoires 13. C'est par exemple le cas lorsque la chambre d'étanchéité 8 est formée entre le joint périphérique 9 et un joint secondaire 11 comme représenté sur la figure 2. Le premier jeu 18 de mâchoires permet par exemple de réaliser le joint proximal 6 et une partie du joint périphérique 9, le deuxième jeu de mâchoires 19 permettant de réaliser le joint distal 7 et le joint secondaire 11.

## Revendications

1. Récipient (1) comprenant une enveloppe extérieure ayant deux parois souples (2) associées entre elles de sorte à former au moins un compartiment principal (3) contenant ou destiné à contenir un fluide, ledit récipient (1) comprenant en outre au moins un conduit d'écoulement (4) dont une extrémité débouche dans ledit compartiment principal (3) et l'autre extrémité s'étend au delà desdites parois souples (2), **caractérisé en ce que** ledit conduit d'écoulement (4) est associé auxdites parois souples (2) le long d'un joint proximal (6) et d'un joint distal (7) distinct du joint proximal (6), lesdites parois souples (2) enveloppant la partie du conduit d'écoulement (4) comprise entre lesdits joints (6,7), de sorte à former, autour de ladite partie du conduit d'écoulement (4), une chambre d'étanchéité (8) fermée et dépourvue d'accès.

2. Récipient (1) selon la revendication 1, **caractérisé en ce que** le conduit d'écoulement (4) est formé par une portion de tube.

3. Récipient (1) selon l'une des revendications 1 ou 2, **caractérisé en ce que** les parois souples (2) sont formées de deux feuilles souples associées entre elles le long d'un joint périphérique (9).

4. Récipient (1) selon la revendication 3, **caractérisé en ce que** le joint proximal (6) et le joint distal (7) sont formés par une partie du joint périphérique (9), la chambre d'étanchéité (8) étant formée dans ledit joint périphérique (9).

5. Récipient (1) selon la revendication 1 à 4, **caractérisé en ce que** chacune des parois souples (2) comprend une languette (10) associées entre elles le long d'un joint secondaire (11) de sorte à former la chambre d'étanchéité (8).

6. Récipient (1) selon les revendications 3 et 5, **caractérisé en ce que** le joint secondaire (11) s'étend en partie sur le joint périphérique (9).

7. Récipient (1) selon l'une des revendications 5 ou 6, **caractérisé en ce que** le joint proximal (6) est formé par une partie du joint périphérique (9), le joint distal (7) étant formé par une partie du joint secondaire (11).

8. Récipient (1) selon l'une des revendications 1 à 7, **caractérisé en ce que** la chambre d'étanchéité (8) possède une première dimension correspondant à la distance entre le joint proximal (6) et le joint distal (7) et une deuxième dimension perpendiculaire à la première dimension, la première dimension et la deuxième dimension étant chacune comprises entre 0,5 cm et 3 cm.

9. Récipient (1) selon l'une des revendications 1 à 8, **caractérisé en ce que** chacun des joints (6,7) est formé par soudure haute fréquence.

10. Récipient (1) selon l'une des revendications 1 à 9, **caractérisé en ce qu'**une tubulure (5) est reliée au conduit d'écoulement (4) dudit récipient (1).

11. Récipient (1) selon l'une des revendications 1 à 10, **caractérisé en ce que** la chambre d'étanchéité (8) contient un réactif capable de réagir avec le fluide du compartiment principal (3) pour détecter une fuite dudit joint proximal (6).

12. Procédé de fabrication d'un récipient selon l'une des revendications 1 à 11, ledit procédé prévoyant les étapes de :
- disposer un conduit d'écoulement (4) entre deux parois souples (2) destinées à former l'enveloppe extérieure dudit récipient (1),
- associer lesdites parois souples (2) et le conduit d'écoulement (4) disposé entre lesdites parois (2), le long d'un joint proximal (6) et d'un joint distal (7), distinct dudit joint proximal (6), en formant une chambre d'étanchéité (8) autour d'une partie dudit conduit d'écoulement (4),
- associer les parties desdites parois non encore associées entre elles de sorte à former le récipient (1).

13. Procédé selon la revendication 12, **caractérisé en ce que** l'association des parois souples (2) et du conduit d'écoulement (4) est réalisée à l'aide d'un système comprenant au moins deux mâchoires de soudage (13) adaptées pour enfermer le conduit d'écoulement (4) et les parois souples lorsque lesdites mâchoires sont fermées, lesdites mâchoires comprenant en outre une cavité (14) pour former au moins en partie la chambre d'étanchéité.

## Patentansprüche

1. Behälter (1), eine Außenhülle umfassend, die zwei flexiblen Wände (2) aufweist, die derart miteinander verbunden sind, um zumindest ein Hauptfach (3) zu formen, das eine Flüssigkeit enthält oder zu enthalten bestimmt ist, wobei der besagte Behälter (1) darüber hinaus zumindest einen Strömungskanal (4) umfasst, von dem ein Ende in das besagte Hauptfach (3) mündet, und sich das andere Ende über die besagten flexiblen Wände (2) hinaus erstreckt, **dadurch gekennzeichnet, dass** der besagte Strömungskanal (4) entlang einer proximalen Dichtung (6) und einer distalen Dichtung (7), die sich von der proximalen Dichtung (6) unterscheidet, mit den besagten flexiblen Wänden (2) verbunden ist, wobei die besagten flexiblen Wände (2) jenen Teil des Strömungskanals (4) umhüllen, der zwischen den besagten Dichtungen (6, 7) enthalten ist, sodass um den besagten Teil des Strömungskanals (4) eine geschlossene und zugangslose Dichtkammer (8) gebildet wird.

2. Behälter (1) nach Anspruch 1, **dadurch gekennzeichnet, dass** der Strömungskanal (4) durch einen Rohrabschnitt gebildet wird.

3. Behälter (1) nach einem der Ansprüche 1 oder 2, **dadurch gekennzeichnet, dass** die flexiblen Wände (2) aus zwei flexiblen Folien gebildet werden, die entlang einer umlaufenden Dichtung (9) miteinander verbunden sind.

4. Behälter (1) nach Anspruch 3, **dadurch gekennzeichnet, dass** die proximale Dichtung (6) und die distale Dichtung (7) durch einen Teil der umlaufenden Dichtung (9) gebildet werden, wobei die Dichtkammer (8) in der besagten umlaufenden Dichtung (9) gebildet wird.

5. Behälter (1) nach Anspruch 1 bis 4, **dadurch gekennzeichnet, dass** jede der flexiblen Wände (2) eine Zunge (10) umfasst, die entlang einer Sekundärdichtung (11) miteinander verbunden sind, um die Dichtkammer (8) zu bilden.

6. Behälter (1) nach den Ansprüchen 3 und 5, **dadurch gekennzeichnet, dass** sich die Sekundärdichtung (11) teilweise auf der umlaufenden Dichtung (9) erstreckt.

7. Behälter (1) nach einem der Ansprüche 5 oder 6, **dadurch gekennzeichnet, dass** die proximale Dichtung (6) durch einen Teil der umlaufenden Dichtung (9) gebildet wird, wobei die distale Dichtung (7) durch einen Teil der Sekundärdichtung (11) gebildet wird.

8. Behälter (1) nach einem der Ansprüche 1 bis 7, **dadurch gekennzeichnet, dass** die Dichtkammer (8) eine erste Abmessung besitzt, die dem Abstand zwischen der proximalen Dichtung (6) und der distalen Dichtung (7) entspricht, sowie eine zweite Abmessung senkrecht zur ersten Abmessung, wobei die erste Abmessung und die zweite Abmessung jeweils zwischen 0,5 cm und 3 cm betragen.

9. Behälter (1) nach einem der Ansprüche 1 bis 8, **dadurch gekennzeichnet, dass** jede der Dichtungen (6, 7) durch Hochfrequenzschweißung gebildet wird.

10. Behälter (1) nach einem der Ansprüche 1 bis 9, **dadurch gekennzeichnet, dass** ein Stutzen (5) mit dem Strömungskanal (4) des besagten Behälters (1) verbunden ist.

11. Behälter (1) nach einem der Ansprüche 1 bis 10, **dadurch gekennzeichnet, dass** die Dichtkammer (8) ein Reagenzmittel umfasst, das imstande ist, mit der Flüssigkeit des Hauptfaches (3) zu reagieren, um ein Leck der besagten proximalen Dichtung (6) zu erkennen.

12. Herstellungsverfahren für einen Behälter nach einem der Ansprüche 1 bis 11, wobei das besagte Verfahren die folgenden Schritte vorsieht:
- Anordnen eines Strömungskanals (4) zwischen zwei flexiblen Wänden (2), die dazu bestimmt sind, die Außenhülle des besagten Behälters (1) zu bilden,
- Verbinden der besagten flexiblen Wände (2) und des besagten Strömungskanals (4), der entlang einer proximalen Dichtung (6) und einer distalen Dichtung (7), die sich von der proximalen Dichtung (6) unterscheidet, zwischen den besagten flexiblen Wände (2) angeordnet ist, um eine Dichtkammer (8) um einen Teil des besagten Strömungskanals (4) zu bilden,
- Verbinden der noch nicht verbundenen Teile der besagten Wände, um den Behälter (1) zu bilden.

13. Verfahren nach Anspruch 12, **dadurch gekennzeichnet, dass** die Verbindung der flexiblen Wände (2) und des Strömungskanals (4) mithilfe eines Systems vorgenommen wird, das zumindest zwei Schweißbalken (13) umfasst, die ausgeführt sind, um den Strömungskanal (4) und die flexiblen Wände einzuschließen, wenn die besagten Balken geschlossen sind, wobei die besagten Balken darüber hinaus eine Vertiefung (14) umfassen, um zumindest teilweise die Dichtkammer zu bilden.

## Claims

1. Container (1) including an outer shell having two flexible walls (2) combined together so as to form at least one main compartment (3) containing or intended to contain a fluid, said container (1) further comprising at least one flow pipe (4) one end of which leads into said main compartment (3) and the other end of which extends beyond said flexible walls (2), **characterised in that** said flow pipe (4) is combined with said flexible walls (2) along a proximal joint (6) and a distal joint (7) separate from the proximal joint (6), said flexible walls (2) surrounding the flow pipe portion (4) between said joints (6, 7), so as to form, around said portion of the flow pipe (4), a closed, inaccessible sealing chamber (8).

2. Container (1) according to claim 1, **characterised in that** the flow pipe (4) is formed by a tube portion.

3. Container (1) according to one of claims 1 or 2, **characterised in that** the flexible walls (2) are formed of two flexible sheets combined together along a peripheral seal (9).

4. Container (1) according to claim 3, **characterised in that** the proximal joint (6) and the distal joint (7) are formed by a portion of the peripheral joint (9), with the sealing chamber (8) being formed in said peripheral joint (9).

5. Container (1) according to claim 1 to 4, **characterised in that** each one of the flexible walls (2) comprises a tab (10) combined together along a secondary joint (11) so as to form the sealing chamber (8).

6. Container (1) according to claims 3 and 5, **characterised in that** the secondary joint (11) extends partially on the peripheral joint (9).

7. Container (1) according to one of claims 5 or 6, **characterised in that** the proximal joint (6) is formed by a portion of the peripheral joint (9), the distal joint (7) being formed by a portion of the secondary joint (11).

8. Container (1) according to one of claims 1 to 7, **characterised in that** the sealing chamber (8) has a first dimension corresponding to the distance between the proximal joint (6) and the distal joint (7) and a second dimension perpendicular to the first dimension, with the first dimension and the second dimension each being between 0.5 cm and 3 cm.

9. Container (1) according to one of claims 1 to 8, **characterised in that** each one of the joints (6, 7) is formed by high-frequency welding.

10. Container (1) according to one of claims 1 to 9, **characterised in that** a pipe (5) is connected to the flow pipe (4) of said container (1).

11. Container (1) according to one of claims 1 to 10, **characterised in that** the sealing chamber (8) contains a reagent able to react with the fluid of the main compartment (3) in order to detect a leak of said proximal joint (6).

12. Method for manufacturing a container according to one of claims 1 to 11, said method having the steps of:
- arranging a flow pipe (4) between two flexible walls (2) intended to form the outer shell of said container (1),
- combining said flexible walls (2) and the flow pipe (4) arranged between said walls (2), along a proximal joint (6) and a distal joint (7), separate from said proximal joint (6), by forming a sealing chamber (8) around said flow pipe portion (4),
- combining the portions of said walls not yet combined together in such a way as to form the container (1).

13. Method according to claim 12, **characterised in that** the combining of the flexible walls (2) and of the flow pipe (4) is carried out using a system comprising at least two welding jaws (13) suited to enclose the flow pipe (4) and the flexible walls when said jaws are closed, said jaws further comprising a cavity (14) for forming at least partially the sealing chamber.
